# EUROPEAN PATENT SPECIFICATION

(11) **EP 4 092 823 B1**
(45) Date of publication and mention of the grant of the patent: **16.09.2026**
(21) Application number: 21788363.6
(22) Date of filing: 02.02.2021
(51) Int. Cl.: H01M 4/02, H01M 4/04, H01M 4/13, H01M 4/66, H01M 10/04, H01M 10/058, H01M 4/139

(54) **SECONDARY BATTERY ELECTRODE**
ELEKTRODE EINER SEKUNDÄRBATTERIE
ÉLECTRODE DE BATTERIE SECONDAIRE

(30) Priority: 16.04.2020 KR 20200045907
(43) Date of publication of application: 23.11.2022
(73) Proprietor: LG Energy Solution, Ltd., Seoul 07335 (KR)
(72) Inventor: CHO, Juhyeon, Daejeon 34122 (KR); KIM, Won Nyeon, Daejeon 34122 (KR); JUNG, Su Taek, Daejeon 34122 (KR); KWON, Soon Kwan, Daejeon 34122 (KR); LEE, Byeong Kyu, Daejeon 34122 (KR)
(74) Representative: Plasseraud IP
(86) International application number: PCT/KR2021/001339
(87) International publication number: WO 2021/210766

(56) References cited:
- JP-A- 2015 517 189
- JP-A- 2016 012 499
- KR-A- 20150 034 564
- KR-A- 20160 014 370
- KR-A- 20190 067 083
- KR-B1- 100 709 863
- US-A1- 2019 393 474

## Description

### [Technical Field]

### Cross-reference with related application(s)

This application claims priority to and the benefit of Korean Patent Application No. 10-2020-0045907 filed in the Korean Intellectual Property Office on 4/16/2020.

The present invention relates to a secondary battery electrode, and more specifically, to a secondary battery electrode that may improve rigidity of an end portion of an electrode current collector to which an electrode tab is attached.

### [Background Art]

With technology development and a demand for mobile devices, demand for secondary batteries as an energy source has been rapidly increasing. Particularly, a secondary battery has attracted considerable attention as an energy source for power-driven devices, such as an electric bicycle, an electric vehicle, and a hybrid electric vehicle, as well as an energy source for mobile devices, such as a cellular phone, a digital camera, a laptop computer, and a wearable device.

The secondary battery may be formed by inserting an electrode assembly consisting of a positive electrode, a negative electrode, and a separator into a case and sealing it. A positive or negative electrode (hereinafter referred to as an "electrode plate") is a positive electrode conductive current collector or a negative electrode conductive current collector coated with an active material slurry by a predetermined thickness, and the electrode assembly may be formed by interposing a separator between the positive conductive current collector and the negative conductive current collector and spirally winding it multiple times in a jelly-roll form or stacking it in a plurality of layers.

The electrode plate may be formed of an active material layer on which an active material slurry is coated and an uncoated region on which the active material slurry is not coated. A rolling process for increasing adhesion between the active material layer and the electrode current collector and increasing an active material capacity density may be included. The rolled electrode plate may be cut and used into a predetermined size by passing through a cutter with a certain width after drying.

In a conventional secondary battery, in order to solve the problem of causing a short circuit due to contact between the positive electrode current collector and a negative electrode and/or contact between the negative electrode current collector and a positive electrode due to shrinkage of the separator at a high temperature, an insulation member is coated on the uncoated region of each electrode plate.

JP 2016 012499 A discloses a secondary battery. US 2019393474 A1 discloses a secondary battery having a structure for suppressing multi-tab short circuits.

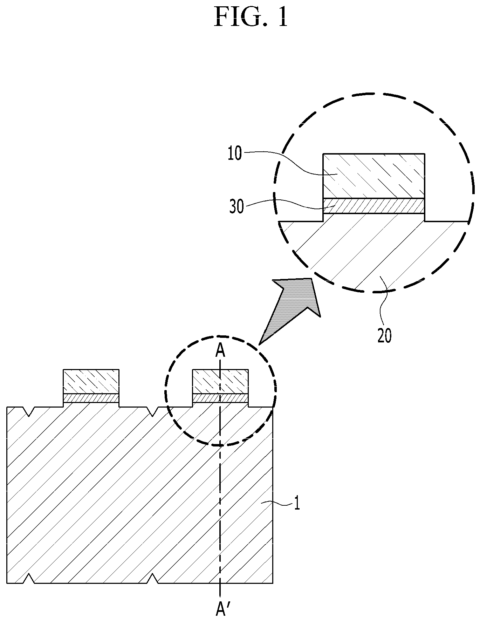

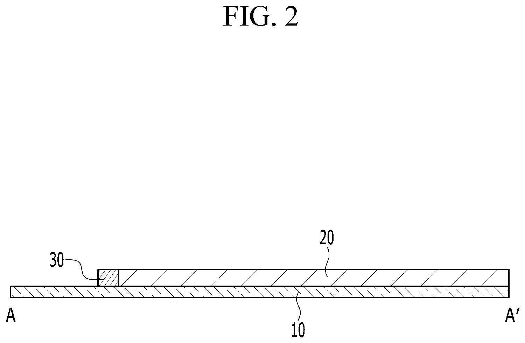

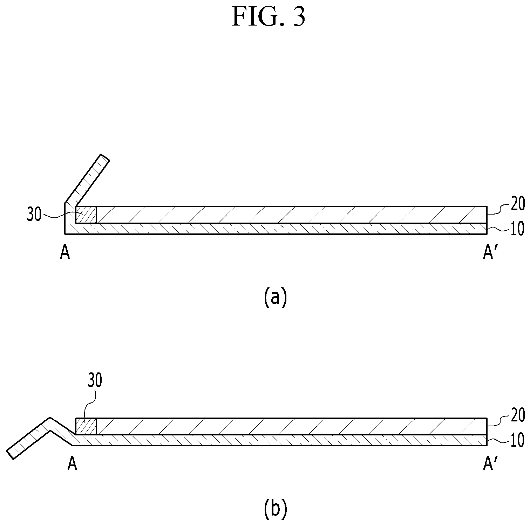

FIG. 1 illustrates an enlarged schematic view of a portion of a conventional electrode. FIG. 2 and FIG. 3 illustrate cross-sectional views taken along line A-A' of FIG. 1. FIG. 3 illustrates a structure in which a portion of an electrode of FIG. 2 is folded or bent, and FIG. 3 (a) illustrates a structure in which the portion of the electrode is folded in the cross-sectional view of FIG. 2 and FIG. 3 (b) illustrates a structure in which the portion of the electrode is bent in the cross-sectional view of FIG. 2.

Referring to FIG. 1 and FIG. 2, an electrode 1 may includes an active material layer 20 coated with an active material on a current collector 10, and an insulating layer 30 coated with an insulating material at a boundary corresponding to an end portion of the active material layer 20 on the current collector 10. In this case, the insulating layer 30 may be positioned to be adjacent to a boundary surface on which the end portion of the active material layer 20 is positioned, and may be positioned to have a region in which the insulating layer 30 overlaps the end portion of the active material layer 20 depending on a kind of an insulating coating solution.

Referring to FIG. 3, in the electrode 1 described in FIG. 1 and FIG. 2, since an exposed region in which the active material layer 20 and the insulating layer 30 are not coated on the current collector 10 may be formed adjacent to an end portion of the current collector, the exposed region may be folded or bent when the electrode 1 passes through a traveling roller as a subsequent process proceeds. In addition, an electrode tab (not shown) may be attached to the exposed region in which the active material layer 20 and the insulating layer 30 are not coated on the current collector 10 through a method such as welding, according to a later process, and in a subsequent process, the electrode tab attached to the exposed region that is folded or bent when passing through the traveling roller is more likely to be easily folded or disconnected, so that a defect rate may be increased and productivity may be decreased.

### [Disclosure]

### [Technical Problem]

A technical problem to be solved of the present invention is to provide a secondary battery electrode that may improve rigidity of an electrode current collector portion to which an electrode tab is attached.

The technical problem to be solved of the present invention is not limited to the above-described problem, and problems not mentioned will be clearly understood by a person of ordinary skill in the art from the present specification and the accompanying drawings.

### [Technical Solution]

The present disclosure provides a secondary battery electrode as defined in independent claim 1.

In addition, the first boundary may correspond to one end portion of the first coating layer spaced apart from one end portion of the electrode current collector at a predetermined distance.

In addition, the first line portion and the at least one or more second line portions may be spaced apart from each other at the same interval.

In addition, the at least one or more second line portions may have the same pattern as the first line portion.

In addition, the at least one or more second line portions and the first line portion may have different patterns, and a line connecting one end and the other end of the second line portion may be parallel to the second boundary.

In addition, an electrode tab may be attached to at least a portion of the second region.

In addition, an electrode tab may be attached to an exposed area between the first line portion and the at least two or more second line portions.

In addition, the second coating layer may have the same height or a smaller height than that of the first coating layer.

In addition, the at least one or more third line portions may be spaced apart from each other at the same intervals.

In addition, the at least one or more third line portions may have the same pattern as the first line portion.

In addition, the at least one or more third line portions and the first line portion may have different patterns, and a line connecting one end and the other end of the third line portion may be parallel to the second boundary.

In addition, the at least one or more second line portions and the at least one or more third line portions may have different thicknesses.

### [Advantageous Effects]

According to the embodiments, an insulating layer having a predetermined pattern is coated on an exposed region of an electrode current collector to which an active material is not coated, so that rigidity of the exposed region of the electrode current collector may be increased by the pattern of the insulating layer. The exposed region is a portion to which an electrode tab is attached, and thus, a defect rate may be reduced and productivity may be increased, by preventing disconnection due to bending or folding of the electrode tab during an electrode manufacturing process.

The effects of the object of the present invention are not limited to the above-described effects, and effects not mentioned will be clearly understood by a person of ordinary skill in the art from the present specification and the accompanying drawings.

### [Description of the Drawings]

FIG. 1 illustrates an enlarged schematic view of a portion of a conventional electrode.
FIG. 2 and FIG. 3 illustrate cross-sectional views taken along line A-A' of FIG. 1.
FIG. 3 illustrates a structure in which a portion of an electrode of FIG. 2 is folded or bent.
FIG. 4 illustrates a top plan view of a secondary battery electrode according to a non inventive embodiment.
FIG. 5 illustrates a cross-sectional view taken along line B-B' of FIG. 4.
FIG. 6 illustrates a top plan view of a secondary battery electrode according to an embodiment of the present invention.
FIG. 7 illustrates a cross-sectional view taken along line C-C' of FIG. 6.
FIG. 8 illustrates a cross-sectional view taken along line D-D' of FIG. 6.

### [Mode for Invention]

The present invention will be described more fully hereinafter with reference to the accompanying drawings, in which embodiments of the invention are shown. As those skilled in the art would realize, the described embodiment may be modified in various different ways, all without departing from the scope of the present invention.

In order to clearly describe the present invention, parts that are irrelevant to the description are omitted, and identical or similar constituent elements throughout the specification are denoted by the same reference numerals.

Further, in the drawings, the size and thickness of each element are arbitrarily illustrated for ease of description, and the present disclosure is not necessarily limited to those illustrated in the drawings. In the drawings, the thicknesses of layers, films, panels, regions, areas, etc., are exaggerated for clarity. In the drawings, for ease of description, the thicknesses of some layers and regions are exaggerated.

In addition, throughout the specification, unless explicitly described to the contrary, the word "comprise" and variations such as "comprises" or "comprising" will be understood to imply the inclusion of stated elements but not the exclusion of any other elements.

Further, throughout the specification, the phrase "in a plan view" or "on a plane" means viewing a target portion from the top, and the phrase "in a cross-sectional view" or "on a cross-section" means viewing a cross-section formed by vertically cutting a target portion from the side.

Hereinafter, a secondary battery electrode according to an embodiment of the present invention will be described. However, herein, an electrode will be described based on an upper surface among upper and lower surfaces of a current collector, but is not limited thereto, and the lower surface thereof may be described with the same or similar contents.

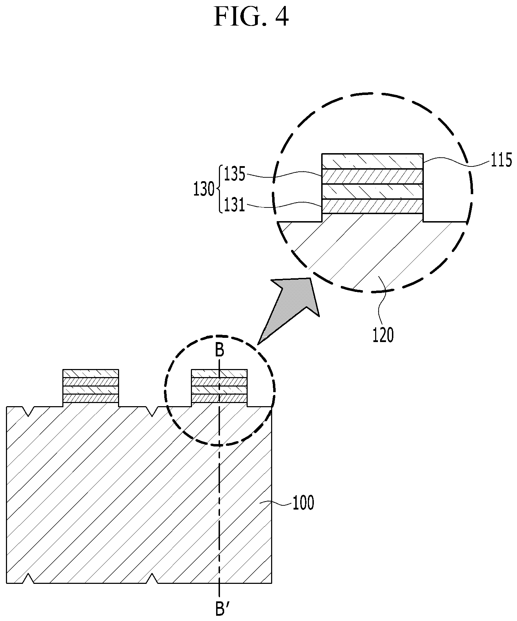

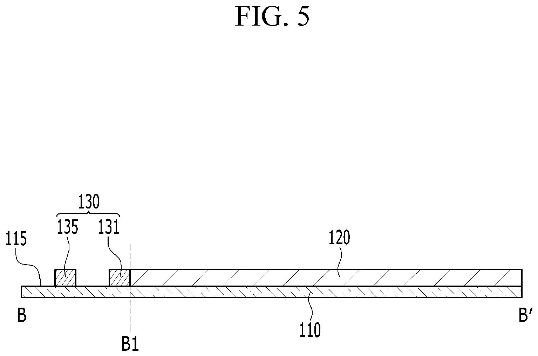

FIG. 4 illustrates a top plan view of a secondary battery electrode according to a non inventive embodiment. FIG. 5 illustrates a cross-sectional view taken along line B-B' of FIG. 4.

Referring to FIG. 4 and FIG. 5, a secondary battery electrode 100 according to the present embodiment includes an electrode current collector 110, an active material layer 120, and an insulating layer 130. The electrode current collector 110 includes a first region in which the active material layer 120 is formed, and a second region that is not covered by the active material layer 120. The active material layer 120 is formed by coating an electrode slurry on the electrode current collector 110. The insulating layer 130 is formed in an exposed region in which the active material layer 120 is not coated in the electrode current collector 110. In this case, the insulating layer 130 may be formed by coating an insulating solution on a region in which the active material layer 120 is not formed.

An end portion of the electrode 100 may be cut into a predetermined size and shape so as to attach an electrode tab in a subsequent process, and particularly, as shown in FIG. 4 and FIG. 5, an end portion (position indicated by "A") in which the insulating layer 130 is positioned on the electrode current collector 110 may be cut into a predetermined size and shape. However, the size and shape shown in FIG. 4 and FIG. 5 are merely examples, and other sizes and shapes suitable for attaching the electrode tab may be applied.

Hereinafter, respective configurations of the secondary battery electrode 100 according to an embodiment of the present application will be described in detail. However, herein, the electrode 100 will be described based on a case in which it is a positive electrode, but is not necessarily limited thereto, and a case in which it is a negative electrode may be described with the same or similar contents.

The active material layer 120 according to the embodiment of the present invention may be formed by coating the electrode slurry on the electrode current collector 110. The active material layer 120 may be formed by coating the electrode slurry on one region of the electrode current collector 110 so as to have a region in which the electrode current collector 110 is exposed. The active material layer 120 may be formed as the electrode slurry is coated on one of regions divided by a first boundary B1 parallel to one end portion in the electrode current collector 110, and a region in which the electrode slurry is not coated may be a region in which the electrode current collector 110 is exposed. The electrode current collector 110 has an exposed region in which the electrode slurry is not coated, but the exposed region may include an uncoated region 115, which is a portion in which an electrode tab is to be formed.

The insulating layer 130 according to the present embodiment is a region in which the electrode slurry is not coated on the electrode current collector 110, and may be a region in which an insulating liquid is coated on a portion of the region in which the electrode current collector 110 is exposed. In addition, the insulating layer 130 may be a region coated with an insulating liquid at a position adjacent to the active material layer 120 in the region in which the electrode current collector 110 is exposed.

According to the present embodiment, the insulating layer 130 includes at least two line portions 131 and 135. As shown in FIG. 4 and FIG. 5, the first line portion 131 and the second line portion 135 may be portions in which an insulating liquid is coated along a predetermined line on a portion of the region in which the electrode current collector 110 is exposed. In addition, a region in which the insulating liquid is not coated on the portion of the exposed region of the electrode current collector 110 may include the uncoated region 115 that is a region in which the electrode tab will be formed.

The first line portion 131 may be disposed adjacent to one end portion of the active material layer 120. In this case, the first line portion 131 may be a portion formed by coating an insulating liquid so as to contact one end portion of the active material layer 120 or to be spaced apart from it by a predetermined distance.

The second line portion 135 may be disposed to be spaced apart from the first line portion 131. The second line portion 135 may have a structure extending parallel to the first line portion 131. In the embodiment described in FIG. 4 and FIG. 5, the first line portion 131 and the second line portion 135 are illustrated as straight line portions, but are not limited thereto, and the first and second line portions 131 and 135 have a predetermined pattern. For example, the predetermined pattern may be a curved line, a hatched line, a dashed line, a dotted line, and the like.

In a modified embodiment, the first line portion 131 and the second line portion 135 may have different patterns. In this case, a line connecting one end and the other end of the second line portion 135 may be parallel to the first line portion 131. In addition, the second line portion 135 may be a coated region to have the same or different thickness as the first line portion 131.

Further, the first line portion 131 and the second line portion 135 included in the insulating layer 130 may be coated regions to have the same or smaller height compared with the active material layer 120, respectively. The first line portion 131 and the second line portion 135 included in the insulating layer 130 may have the same height, but may be coated regions to have the same height as or a height smaller than the active material layer 120. When the insulating layer 130 has a higher height than the active material layer 120, since the insulating layer 130 or a portion in which the insulating layer 130 and the active material layer 120 overlap may protrude, a final cell appearance may be affected, and the exposed region of the electrode current collector 110 in which the electrode slurry is not coated may be bent or folded.

Therefore, as the electrode 100 according to the embodiment further includes the second line portion 135 as well as the first line portion 131 in which the insulating layer 130 is closest to the active material layer 120, rigidity of the exposed region of the electrode current collector 110 in which the electrode slurry is not coated may be increased. Accordingly, the exposed region in which the electrode slurry is not coated in the electrode current collector 110 may not be easily bent or folded. In addition, according to the present embodiment, since the region of the uncoated region 115 may be reduced compared with the conventional electrode, even if the electrode tab is formed in the uncoated region 115 included in the exposed region in which the electrode slurry is not coated in the electrode current collector 110, it may not be easily bent or folded. That is, through this, the electrode 100 according to the embodiment of the present invention may be expected to have a complex effect of preventing disconnection, improving a lifespan of the battery, and increasing productivity, as well as an effect of preventing short circuit, which is a basic effect provided by the insulating layer 130.

The insulating liquid coated on the insulating layer 130 is a non-conductive material, and the insulating layer 130 may be formed by coating and drying the insulating liquid. However, the insulating liquid is not particularly limited as long as it is a non-conductive material without causing chemical changes to the secondary battery using the electrode according to the present embodiment. For example, the first line portion 131 and the second line portion 135 may include a non-conductive material, and in this case, may include the same material or different non-conductive materials. In addition, viscosity of the insulating liquid may be adjusted in order to reduce a degree at which the insulating liquid and materials forming the electrode slurry are mixed by diffusion. For example, the first line portion 131 and the second line portion 135 may be coated with an insulating liquid having the same viscosity. In addition, the first line portion 131 may be positioned adjacent to the active material layer 120 coated with the electrode slurry to be adjusted to have high viscosity, while the second line portion 135 may be adjusted to have low viscosity. In addition, the insulating layer 130 may prevent the electrode current collector 110 and an electrode having a polarity different from that of the electrode current collector 110 from contacting each other to be short-circuited due to the shrinkage of the separator generated as the secondary battery is used at a high temperature. In addition, the insulating layer 130 may increase stability of a battery cell by preventing the short circuit as described above.

Hereinafter, an electrode manufacturing method according to another embodiment of the present invention will be described.

Referring to FIG. 4 and FIG. 5, the electrode manufacturing method according to the present embodiment may include forming the active material layer 120 by coating an electrode slurry on the electrode current collector 110 while rolling the electrode current collector 110. The forming of the active material layer 120 may include drying the electrode slurry. In addition, it may include forming the insulating layer 130 by coating an insulating solution on the exposed region in which the electrode slurry is not coated. The forming of the insulating layer 130 may be performed after the electrode slurry of the active material layer 120 is completely dried. In addition, the forming of the insulating layer 130 may include drying the insulating liquid.

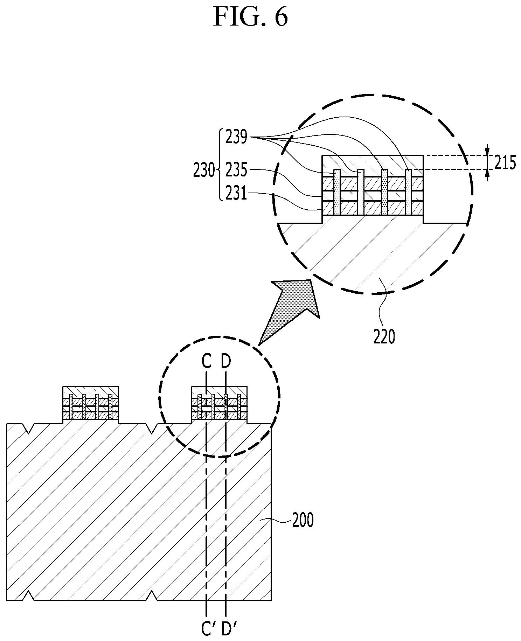

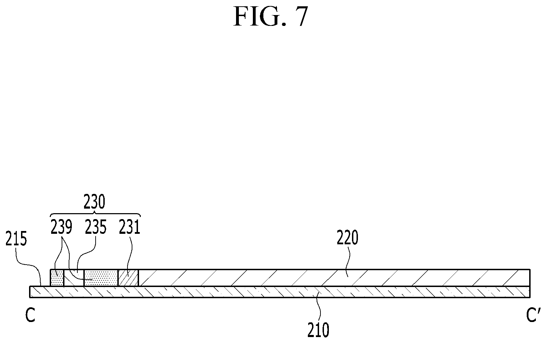

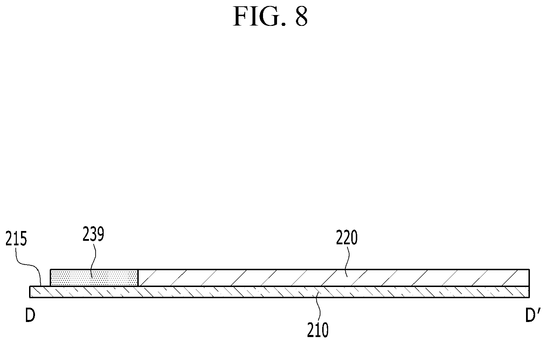

FIG. 6 illustrates a top plan view of a secondary battery electrode according to an embodiment of the present invention. FIG. 7 illustrates a cross-sectional view taken along line C-C' of FIG. 6. FIG. 8 illustrates a cross-sectional view taken along line D-D' of FIG. 6. However, since there are some duplicate contents with those described with reference to FIG. 4 and FIG. 5, different features will be mainly described in detail.

A secondary battery electrode 200 according to the present embodiment includes an electrode current collector 210, an active material layer 220, and an insulating layer 230. The electrode current collector 210 and the active material layer 220 are the same as those described above, so descriptions thereof will be omitted below. In addition, a region in which the insulating liquid is not coated on the portion of the exposed region of the electrode current collector 210 may include an uncoated region 215 that is a region in which the electrode tab will be formed. The uncoated region 215 may be an exposed region of the electrode current collector 210 that deviates from an end portion of the insulating layer 230 positioned in a direction away from the active material layer 220.

In addition, the insulating layer 130 may include at least one or more line portions, and in this case, may be a region coated with an insulating liquid to have a predetermined pattern on a portion of the exposed region of the electrode current collector 110.

The insulating layer 230 according to the present embodiment includes at least two line portions, and in this case, the line portions may include a first line portion 231 and a second line portion 235, and includes a third line portion 239. Descriptions of the first line portion 231 and the second line portion 235 are the same as those described above, so will be omitted below.

The third line portion 239 includes at least one or more line portions extending in a direction crossing the first line portion 231 and/or the second line portion 235. The third line portion 239 may include at least two or more line portions extending in a direction crossing the first line portion 231 and/or the second line portion 235, and the at least two or more line portions may be spaced apart from each other at a predetermined interval. The third line portion 239 may have the same pattern as the first line portion 231 or the second line portion 235.

In addition, the third line portion 239 includes at least one or more line portions extending in a direction crossing the first line portion 231 and/or the second line portion 235, and in this case, at least two or more line portions may have a predetermined pattern. For example, the predetermined pattern may be a straight line, a curved line, a hatched line, a dashed line, a dotted line, and the like. In FIG. 6 to FIG. 8, for convenience of description, the predetermined pattern is indicated by a straight line. For example, the first line portion 231, the second line portion 235, and the third line portion 239 may form a lattice pattern according to a predetermined pattern on the exposed region of the electrode current collector 210. In addition, when the third line portion 239 has a different pattern from the first line portion 231 and/or the second line portion 235, a line that connects one end and the other end of the third line portion 239 may be perpendicular to the first line portion 231 and/or the second line portion 235. In addition, the third line portion 239 may be a region coated to have the same or a different thickness as or from the first line portion 231 and/or the second line portion 235.

Further, the third line portion 239 included in the insulating layer 230 may be coated regions to have the same or smaller height compared with the active material layer 220. The first line portion 231, the second line portion 235, and the third line portion 239 included in the insulating layer 230 may have the same height, but may be coated regions to have the same height as or a height smaller than the active material layer 220. When the insulating layer 230 has a higher height than the active material layer 220, since the insulating layer 230 or a portion in which the insulating layer 230 and the active material layer 220 overlap may protrude, a final cell appearance may be affected, and the exposed region of the electrode current collector in which the electrode slurry is not coated may be bent or folded.

In addition, the insulating liquid coated on the insulating layer 230 is a non-conductive material, and the insulating layer 230 may be formed by coating and drying the insulating liquid. However, the insulating liquid is not particularly limited as long as it is a non-conductive material without causing chemical changes to the battery using the electrode according to the present embodiment. For example, the first line portion 231, the second line portion 235, and the third line portion 239 may include a non-conductive material, and in this case, may include the same material or different non-conductive materials. **In** addition, viscosity of the insulating liquid may be adjusted in order to reduce a degree at which the insulating liquid and materials forming the electrode slurry are mixed by diffusion. For example, the first line portion 231 to the third line portion 239 may be coated with an insulating liquid having the same viscosity. In addition, the first line portion 231 may be positioned adjacent to the active material layer 220 coated with the electrode slurry to be adjusted to have high viscosity, while the second line portion 235 and the third line portion 239 may be adjusted to have low viscosity.

Therefore, as the electrode 200 according to the embodiment further includes the second line portion 235 and the third line portion 239 as well as the first line portion 231 in which the insulating layer 230 is adjacent to the active material layer 220, rigidity of the exposed region of the electrode current collector 210 in which the electrode slurry is not coated may be increased. In addition, as the electrode 200 according to the embodiment of the present application further includes the second line portion 235 and the third line portion 239 as well as the first line portion 231 in which the insulating layer 230 is adjacent to the active material layer 220, the exposed region of the electrode current collector 210 in which the electrode slurry is not coated may not be easily bent or folded. Further, as the electrode 200 according to the embodiment of the present application further includes the second line portion 235 and the third line portion 239 as well as the first line portion 231 in which the insulating layer 130 is adjacent to the active material layer 220, since the region of the uncoated portion 215 may be reduced compared with the conventional electrode, even if the electrode tab is formed in the exposed region of the electrode current collector 210 in which the electrode slurry is not coated, it may not be easily bent or folded. That is, through this, the electrode 200 according to the embodiment of the present application may be expected to have a complex effect of preventing disconnection and improving a lifespan of the battery as well as an effect of preventing a short circuit, which is a basic effect provided by the insulating layer 230. In addition, through this, productivity of the electrode 200 according to the embodiment of the present application may increase by reducing a defect such as disconnection that may occur in a subsequent process.

As a modified embodiment, one of the first line portion 231 and the second line portion 235 may be omitted. In this case, one of the first line portion 231 and the second line portion 235, as well as the third line portion 239, may form a lattice pattern.

In addition to the differences described above, the contents described with reference to FIG. 4 and FIG. 5 are all applicable to the present embodiment.

While this invention has been described in connection with what is presently considered to be practical embodiments, it is to be understood that the invention is not limited to the disclosed embodiments, but, on the contrary, is intended to cover various modifications includec within the scope of the appended claims.

### [Description of symbols]

100: electrode
110, 210: electrode current collector
120, 220: active material layer
130, 230: insulating layer

## Claims

1. A secondary battery electrode (100), comprising:
an electrode current collector (110, 210) including first and second regions;
an active material layer (120, 220) positioned on the first region of the electrode current collector (110, 210); and
an insulating layer (130, 230) positioned on the second region of the electrode current collector (110, 210) wherein the second region is not covered by the active material layer (120, 220),
**characterized in that** the insulating layer (130, 230) includes a first line portion, a second line portion and a third line portion, and
the third line portion crosses the first line portion and/or the second line portion.

2. The secondary battery electrode (100) of claim 1, wherein
a first boundary that partitions the first region and the second region corresponds to one end portion of the active material layer (120, 220), and the first line portion and the second line portion are spaced apart from each other at the same interval.

3. The secondary battery electrode (100) of claim 1, wherein
the second line portion has the same pattern as the first line portion.

4. The secondary battery electrode (100) of claim 1, wherein
the first line portion and the second line portion have different patterns, and
a line connecting one end and the other end of the second line portion is parallel to the first line portion.

5. The secondary battery electrode (100) of claim 1, wherein
an electrode tab is attached to at least a portion of the second region.

6. The secondary battery electrode (100) of claim 1, wherein
the insulating layer (130, 230) has the same height as or a smaller height than that of the active material layer (120, 220).

7. The secondary battery electrode (100) of claim 1, wherein
at least one or more third line portions are spaced apart from each other at the same intervals.

8. The secondary battery electrode (100) of claim 1, wherein
the third line portion has the same pattern as the first line portion.

9. The secondary battery electrode (100) of claim 1, wherein
the third line portion and the first line portion have different patterns, and
a line connecting one end and the other end of the third line portion is parallel to a second boundary.

10. The secondary battery electrode (100) of claim 1, wherein
the second line portion and the third line portion have different thicknesses.

## Patentansprüche

1. Sekundärbatterieelektrode (100), umfassend:
einen Elektrodenstromkollektor (110, 210), der einen ersten und einen zweiten Bereich enthält;
eine Aktivmaterialschicht (120, 220), die auf dem ersten Bereich des Elektrodenstromkollektors (110, 210) positioniert ist; und
eine Isolierschicht (130, 230), die auf dem zweiten Bereich des Elektrodenstromkollektors (110, 210) positioniert ist, wobei der zweite Bereich nicht durch die Aktivmaterialschicht (120, 220) bedeckt ist,
**dadurch gekennzeichnet, dass** die Isolierschicht (130, 230) einen ersten Linienabschnitt, einen zweiten Linienabschnitt und einen dritten Linienabschnitt enthält, und
der dritte Linienabschnitt den ersten Linienabschnitt und/oder den zweiten Linienabschnitt kreuzt.

2. Sekundärbatterieelektrode (100) nach Anspruch 1, wobei
eine erste Grenze, die den ersten Bereich und den zweiten Bereich unterteilt, einem Endabschnitt der Aktivmaterialschicht (120, 220) entspricht, und der erste Linienabschnitt und der zweite Linienabschnitt in demselben Abstand voneinander beabstandet sind.

3. Sekundärbatterieelektrode (100) nach Anspruch 1, wobei
der zweite Linienabschnitt dasselbe Muster wie der erste Linienabschnitt aufweist.

4. Sekundärbatterieelektrode (100) nach Anspruch 1, wobei
der erste Linienabschnitt und der zweite Linienabschnitt unterschiedliche Muster aufweisen, und
eine Linie, die ein Ende und das andere Ende des zweiten Linienabschnitts verbindet, parallel zum ersten Linienabschnitt ist.

5. Sekundärbatterieelektrode (100) nach Anspruch 1, wobei
eine Elektrodenfahne an mindestens einem Teil des zweiten Bereichs angebracht ist.

6. Sekundärbatterieelektrode (100) nach Anspruch 1, wobei
die Isolierschicht (130, 230) dieselbe Höhe oder eine geringere Höhe als die der Aktivmaterialschicht (120, 220) aufweist.

7. Sekundärbatterieelektrode (100) nach Anspruch 1, wobei
mindestens ein oder mehrere dritte Linienabschnitte in denselben Abständen voneinander beabstandet sind.

8. Sekundärbatterieelektrode (100) nach Anspruch 1, wobei
der dritte Linienabschnitt dasselbe Muster wie der erste Linienabschnitt aufweist.

9. Sekundärbatterieelektrode (100) nach Anspruch 1, wobei
der dritte Linienabschnitt und der erste Linienabschnitt unterschiedliche Muster aufweisen, und
eine Linie, die ein Ende und das andere Ende des dritten Linienabschnitts verbindet, parallel zu einer zweiten Grenze ist.

10. Sekundärbatterieelektrode (100) nach Anspruch 1, wobei
der zweite Linienabschnitt und der dritte Linienabschnitt unterschiedliche Dicken aufweisen.

## Revendications

1. Électrode de batterie secondaire (100), comprenant :
un collecteur de courant d'électrode (110, 210) incluant des première et deuxième régions ;
une couche de matière active (120, 220) positionnée sur la première région du collecteur de courant d'électrode (110, 210) ; et
une couche isolante (130, 230) positionnée sur la deuxième région du collecteur de courant d'électrode (110, 210), dans laquelle la deuxième région n'est pas recouverte par la couche de matière active (120, 220),
**caractérisée en ce que** la couche isolante (130, 230) inclut une première partie linéaire, une deuxième partie linéaire et une troisième partie linéaire, et
la troisième partie linéaire croise la première partie linéaire et/ou la deuxième partie linéaire.

2. L'électrode de batterie secondaire (100) selon la revendication 1, dans laquelle
une première limite qui sépare la première région de la deuxième région correspond à une partie d'extrémité de la couche de matière active (120, 220), et la première partie linéaire et la deuxième partie linéaire sont espacées l'une de l'autre au même intervalle.

3. L'électrode de batterie secondaire (100) selon la revendication 1, dans laquelle
la deuxième partie linéaire a le même motif que la première partie linéaire.

4. L'électrode de batterie secondaire (100) selon la revendication 1, dans laquelle
la première partie linéaire et la deuxième partie linéaire ont des motifs différents, et une ligne reliant une extrémité et l'autre extrémité de la deuxième partie linéaire est parallèle à la première partie linéaire.

5. L'électrode de batterie secondaire (100) selon la revendication 1, dans laquelle une languette d'électrode est fixée à au moins une partie de la deuxième région.

6. L'électrode de batterie secondaire (100) selon la revendication 1, dans laquelle
la couche isolante (130, 230) a la même hauteur ou une hauteur inférieure à celle de la couche de matière active (120, 220).

7. L'électrode de batterie secondaire (100) selon la revendication 1, dans laquelle
au moins une ou plusieurs troisièmes parties linéaires sont espacées les unes des autres aux mêmes intervalles.

8. L'électrode de batterie secondaire (100) selon la revendication 1, dans laquelle
la troisième partie linéaire a le même motif que la première partie linéaire.

9. L'électrode de batterie secondaire (100) selon la revendication 1, dans laquelle
la troisième partie linéaire et la première partie linéaire ont des motifs différents, et une ligne reliant une extrémité et l'autre extrémité de la troisième partie linéaire est parallèle à une deuxième limite.

10. L'électrode de batterie secondaire (100) selon la revendication 1, dans laquelle la deuxième partie linéaire et la troisième partie linéaire ont des épaisseurs différentes.
